# DEMANDE DE BREVET EUROPEEN

(11) **EP 4 538 898 A1**
(43) Date de publication de la demande: **16.04.2025**
(21) Numéro de dépôt: 24203014.6
(22) Date de dépôt: 26.09.2024
(51) Int. Cl.: G06F 13/28, G06F 13/42

(54) **PROCÉDÉ DE COMMUNICATION DE DONNÉES ENTRE UN DISPOSITIF ESCLAVE ET UN DISPOSITIF MAÎTRE, ET SYSTÈME INTÉGRÉ CORRESPONDANT**

(30) Priorité: 10.10.2023 FR 2310823
(71) Demandeur: STMicroelectronics International N.V., 1228 Plan-les-Ouates, Geneva (CH)
(72) Inventeur: Nai, Alexis M., 13100 Aix en Provence (FR); Curtet, Joel M., 38760 Saint Paul de Varces (FR)
(74) Mandataire: Casalonga

(57) **Abrégé**

Un aspect concerne un procédé de communication de données entre un dispositif esclave (SLV) et un dispositif maître (HST) selon un protocole de communication (SDIO), les données étant enregistrées dans une mémoire appartenant au dispositif esclave (SLV), le procédé comprenant une génération par le dispositif maître d'une commande (CMD) prévue par ledit protocole de communication, et une utilisation d'un champ de la commande (RegAdd) afin de sélectionner un registre d'indirection (DMAi_BAdd ; DMAi_Sz) appartenant au dispositif esclave et contenant une adresse d'une région de la mémoire (MEM) comportant les données.

## Description

Des modes de réalisation et de mise en oeuvre concernent les procédés de communication de données dans un système intégré, notamment des communications suivant la norme « SDIO » pour « Secure Digital Input Output » définie par le groupement « SD Association ».

La communication du type « SDIO » entre un dispositif maître et un dispositif esclave s'effectue classiquement à l'aide de commandes spécifiques à la norme.

Les commandes SDIO sont définies par le standard et contiennent des champs fixes, destinés à contenir des informations utiles telles qu'une indication du type de commande (un « index de commande »), un numéro de fonction, l'adresse des données de lecture/écriture à transférer, etc.

La norme SDIO permet notamment une possibilité de 8 fonctions. La fonction 0 est réservée pour mettre en oeuvre la norme. Les fonctions 1 à 7 sont libres. Chaque fonction peut être mappée dans son propre espace mémoire.

La norme autorise un champ d'adresse de 17 bits pour les commandes de lecture/écriture directe et étendue (usuellement « IO_RW_DIRECT » et « IO_RW_EXTENDED » respectivement).

Ceci limite la plage d'adresse à 128 kB (kilo Bytes).

Même en utilisant les 7 fonctions, la plage de 128kB*7 = 896kB n'est pas suffisant pour des cas d'utilisations de fonctionnalités du dispositif esclave, telles que par exemple pour l'envoi et la réception de paquet de données, placée dans une mémoire du dispositif esclave mettant en oeuvre une communication du type WiFi.

Afin d'augmenter la taille de la plage d'adresses accessibles dans la mémoire avec des commandes SDIO, il a été proposé d'utiliser une liste chaînée de descripteurs dans la mémoire du dispositif esclave. Or, cette solution antérieure présente les inconvénients de ne pas pouvoir programmer la liste chaînée par le dispositif maître, ni contrôler la plage d'adresse par le dispositif maître, et d'être limité en volume par transmissions, par exemple limité à 128kB par transmission.

Il existe ainsi un besoin de bénéficier d'une plus grande souplesse dans les communications SDIO, notamment afin de permettre des transferts plus grands.

Des aspects et modes de mise en oeuvre et de réalisation définis ci-après proposent un adressage indirect via un registre d'indirection, permettant un accès du type canal d'accès direct en mémoire, de sorte qu'une seule commande de lecture ou d'écriture peut atteindre n'importe quelle région mémoire (par exemple jusqu'à 1 MB) n'importe où dans la mémoire (par exemple de 4 GB).

En outre, le registre d'indirection peut être configuré par le dispositif maître, de manière à bénéficier d'une fonctionnalité adaptée aux besoins et capacité du dispositif maître d'une part, ou par le dispositif esclave, de manière à pouvoir imposer des mesures de sécurités, telles qu'un filtrage du type pare-feu, dans l'accès à la mémoire d'autre part.

Selon un aspect, il est proposé à ces égards un procédé de communication de données entre un dispositif esclave et un dispositif maître selon un protocole de communication, les données étant enregistrées dans une mémoire appartenant au dispositif esclave, le procédé comprenant une génération par le dispositif maître d'une commande prévue par ledit protocole de communication, et une utilisation d'un champ de la commande afin de sélectionner un registre d'indirection appartenant au dispositif esclave et contenant une adresse d'une région de la mémoire comportant les données.

Selon un mode de mise en oeuvre, le protocole de communication prévoit que le champ de la commande est destiné à contenir une adresse d'un emplacement de mémoire sur un premier nombre de bits ; le registre d'indirection comportant un deuxième nombre de bits supérieur au premier nombre pour contenir l'adresse de la région de la mémoire comportant les données.

Selon un mode de mise en oeuvre, le registre d'indirection contient une adresse de base et la taille de la région de la mémoire contenant les données.

Par exemple, avec des registres de 32 bits pour l'adresse de base et de 20 bits pour la taille de la région mémoire, les données communiquées peuvent avoir une taille de 1 MB située dans toute l'étendue d'une mémoire de 4 GB.

Selon un mode de mise en oeuvre, l'utilisation du champ de la commande comporte :
- un code, sur les bits de poids forts du champ, pour identifier le registre d'indirection qui contient l'adresse de la région de la mémoire contenant lesdites données, parmi plusieurs registres d'indirection du dispositif esclave contenant des adresses d'autres régions respectives de la mémoire ; et
- une quantification, sur les bits de poids faible du champ, d'un décalage d'adresse positionnant le début de l'emplacement des données dans la région.

Selon un mode de mise en oeuvre, ladite commande comporte en outre la taille des données de ladite communication.

Ainsi, dans ces deux modes de mise en oeuvre, le dispositif maître peut définir précisément dans la commande les adresses de début et de fin (par la taille de l'emplacement) des données de la mémoire.

Selon un mode de mise en oeuvre, le protocole de communication suit la norme de communication « Secure Digital Input Output - SDIO » définie par le groupement « SD Association », et dans lequel la commande est une commande étendue de lecture/écriture par blocs.

Selon un mode de mise en oeuvre, le procédé comprend en outre une autre utilisation du champ de la commande afin d'adresser un registre d'une fonction suivant ledit protocole, comportant un code dédié sur les bits de poids forts du champ pour identifier cette autre utilisation.

Selon un autre aspect, il est également proposé un système intégré comportant un dispositif esclave et un dispositif maître aptes à communiquer des données entre eux selon un protocole de communication, les données étant enregistrées dans une mémoire appartenant au dispositif esclave, le dispositif maître étant configuré pour générer une commande prévue par ledit protocole de communication, et pour utiliser un champ de la commande afin de sélectionner un registre d'indirection appartenant au dispositif esclave et apte à contenir une adresse d'une région de la mémoire comportant les données.

Selon un mode de réalisation, le protocole de communication prévoit que le champ de la commande est destiné à contenir une adresse d'un emplacement de mémoire sur un premier nombre de bits ; le registre d'indirection étant apte à comporter un deuxième nombre de bits supérieur au premier nombre pour contenir l'adresse de la région de la mémoire comportant les données.

Selon un mode de réalisation, le registre d'indirection est apte à contenir une adresse de base et la taille de la région de la mémoire contenant les données.

Selon un mode de réalisation, le dispositif maître est configuré pour utiliser le champ de la commande en y incorporant :
- un code, sur les bits de poids forts du champ, pour identifier le registre d'indirection contenant l'adresse de la région de la mémoire contenant lesdites données, parmi plusieurs registres d'indirection du dispositif esclave contenant des adresses d'autres régions respectives de la mémoire ; et
- une quantification, sur les bits de poids faible du champ, d'un décalage d'adresse positionnant le début de l'emplacement des données dans la région.

Selon un mode de réalisation, le dispositif maître est configuré pour incorporer en outre dans ladite commande la taille des données de ladite communication.

Selon un mode de réalisation, le dispositif esclave et le dispositif maître sont aptes à communiquer des données entre eux selon le protocole de communication suivant la norme de communication « Secure Digital Input Output - SDIO » définie par le groupement « SD Association ».

Selon un mode de réalisation, le dispositif maître est en outre configuré pour autrement utiliser le champ de la commande afin d'adresser un registre d'une fonction suivant ledit protocole, en y incorporant un code respectivement dédié, sur les bits de poids forts du champ, pour identifier cette autre utilisation.

D'autres avantages et caractéristiques de l'invention apparaîtront à l'examen de la description détaillée de modes de mise en oeuvre et de réalisation, nullement limitatif, et des dessins annexés sur lesquels les figures :
[Fig.1] ;
[Fig.2] ;
[Fig.3] ;
[Fig.4] ;
[Fig.5] ;
[Fig.6] ;

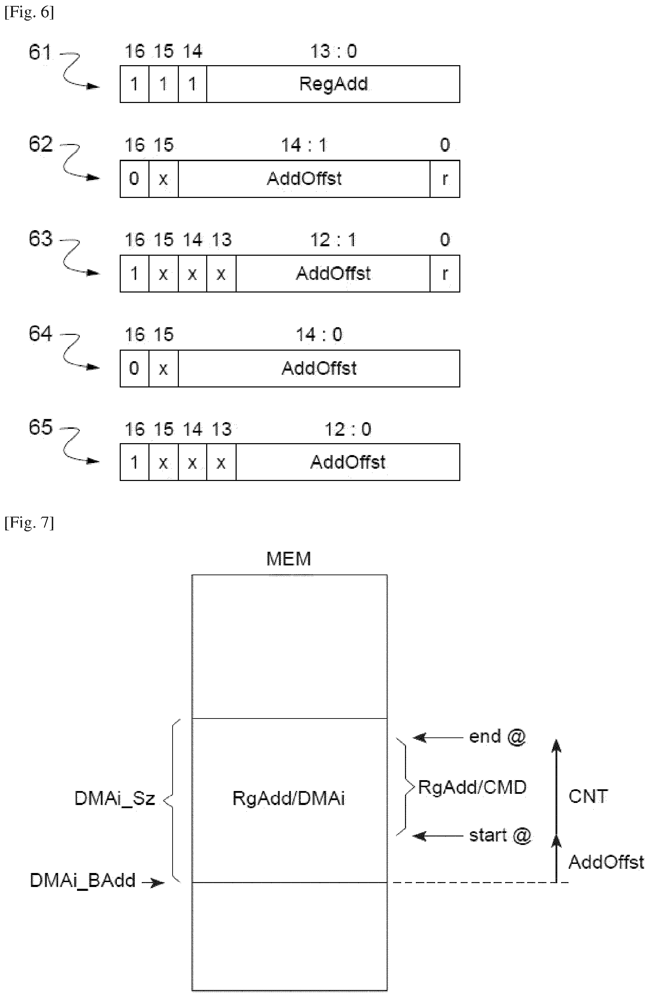

[Fig.7] illustrent des modes de réalisation et de mise en oeuvre de l'invention.

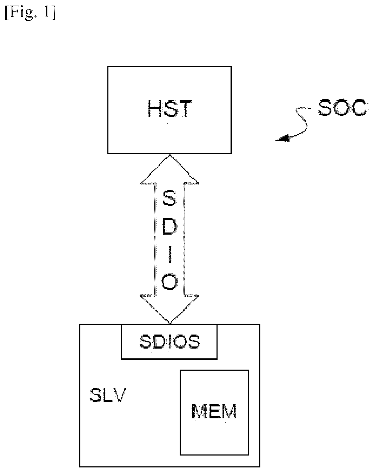

La figure 1 illustre un exemple de système intégré SOC, tel qu'un système sur puce, comportant un dispositif maître HST, usuellement appelé « hôte » ou « host » en anglais, et un dispositif esclave SLV aptes à communiquer des données entre eux, selon un protocole de communication sur un canal SDIO.

Le dispositif maître HST est par exemple le processeur d'application du système intégré, tandis que le dispositif esclave SLV est par exemple un périphérique fournissant les ressources pour mettre en oeuvre une fonctionnalité donnée, par exemple une fonctionnalité de communication sans fil du type Wifi.

Le dispositif maître HST et le dispositif esclave SLV sont par exemple réalisée sur une même puce de silicium entièrement intégré du type système sur puce, ou bien selon des puces distinctes connectées à une même carte de circuit imprimé (usuellement « PCB » pour « Printed Circuit Board » en anglais) dans le système intégré.

Le dispositif esclave SLV comporte en particulier une interface esclave SDIOS adapté au protocole de communication « Secure Digital Input Output » défini par la norme établie par le groupe « SD Association », une mémoire MEM et une unité centrale interne adaptée pour ladite fonctionnalité.

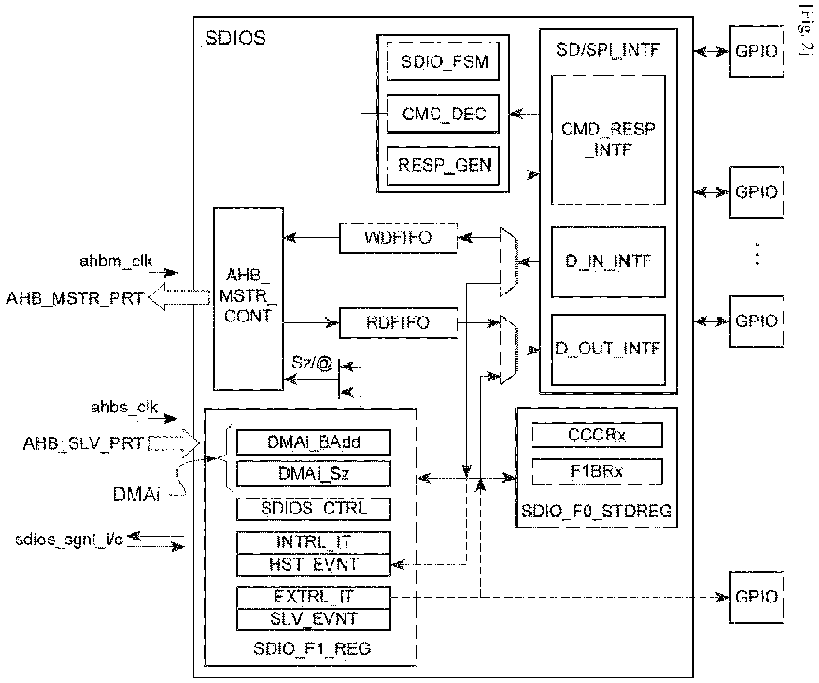

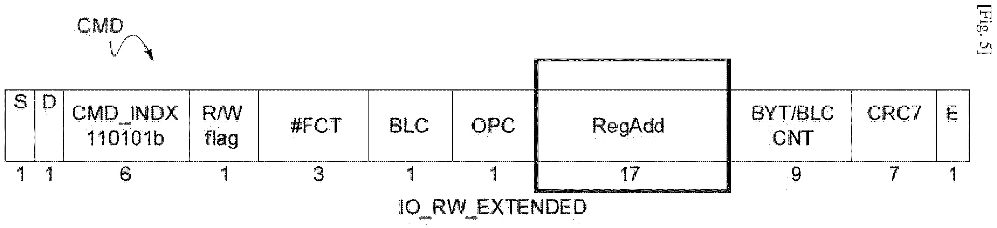

L'interface esclave SDIOS comporte notamment et avantageusement au moins un registre d'indirection DMAi (Fig.2), prévu pour contenir une adresse d'une région de la mémoire MEM, pouvant être sélectionné par le dispositif maître dans une commande adaptée CMD (Fig.5) du protocole de communication.

En effet, le dispositif maître est avantageusement configuré pour générer la commande CMD (Fig.5) prévue par ledit protocole de communication, adaptée par l'utilisation d'un champ de la commande RegAdd (Fig.5) afin de sélectionner le registre d'indirection DMAi du dispositif esclave. Ainsi, le dispositif peut atteindre dans la mémoire MEM l'adresse contenu dans le registre d'indirection DMAi, par exemple dans le cadre d'une communication de données en lecture ou en écriture dans la mémoire MEM.

La figure 2 illustre un exemple de réalisation de l'interface esclave SDIOS.

D'une part, l'interface SDIOS comporte des terminaux d'entrées/sortie d'usage général GPIO, une interface de bus SD/SPI_INTF compatible avec le protocole SDIO (voire aussi avec d'autres protocoles, tel que le protocole du bus de données série « SPI » pour « Serial Peripheral Interface » en anglais), comportant par exemple une interface de commande et de réponses CMD_RESP_INTF, une interface de données d'entrées D_IN_INTF, une interface de données de sortie D_OUT_INTF.

L'interface de bus SD/SPI_INTF peut être commandée par un organe de commande pouvant comporter une machine d'état SDIO_FSM, un décodeur de commande CMD_DEC, un générateur de réponse RESP_GEN, et communiquer, via des circuits de multiplexage, avec des tampons entrant WDFIFO et sortant RDFIFO d'un contrôleur de bus maître AHB_MSTR_CONT et avec des banques de registres SDIO_F0_STDREG, SDIO_F1_REG.

Le contrôleur de bus maître AHB_MSTR_CONT, par exemple un bus du type « AHB » (pour « Advanced High-performance Bus » en anglais), peut par exemple générer des communications vers l'unité centrale interne du dispositif esclave SLV sur un port de bus maître respectif AHB_MSTR_PRT et recevoir un signal d'horloge du bus maître ahbm_clk. En outre, des communications du bus AHB esclave peuvent être reçues sur un port de bus esclave AHB_SLV_PRT ainsi qu'un signal d'horloge du bus esclave ahbs_clk.

D'autres signaux sdios_sgnl_i/o entrant et sortant, d'usage général et suivant le protocole SDIO peuvent être prévus sans être exhaustivement détaillés ici.

D'autre part, une banque réservée de registres SDIO_F0_STDREG, et une première banque de registres SDIO_F1_REG sont prévues dans l'interface esclave SDIOS.

La banque réservée de registres SDIO_F0_STDREG, de façon imposée par la norme SDIO respective, comporte les instructions CCCRx, F1BRx, permettant la mise en oeuvre du protocole SDIO. Le protocole SDIO permet par ailleurs sept autres fonctions distinctes afin d'exploiter les ressources du dispositif esclave SLV.

La première banque de registres SDIO_F1_REG permet de mettre en oeuvre une première fonction du dispositif esclave SLV. La première fonction peut éventuellement être la seule fonction du protocole SDIO utiliser par le dispositif esclave SLV. En d'autres termes, toutes les ressources du dispositif esclave SLV peuvent être accédées par la mise en oeuvre d'une seule fonction du protocole SDIO. Cela peut par exemple être le cas d'un dispositif esclave SLV mettant en oeuvre des communications sans fil du type Wifi.

La première banque de registres SDIO_F1_REG peut comporter par exemple à cet égard un registre de contrôler SDIOS_CTRL, un registre d'interruption interne INTRL_IT et de notification d'événement à l'hôte HST_EVNT, un registre d'interruption externe EXTRL_IT et de notification d'événement au périphérique SLV_EVNT.

La première banque SDIO_F1_REG comporte en outre avantageusement au moins un registre d'indirection DMAi apte à contenir une adresse d'une région de la mémoire MEM comportant des données à lire ou à écrire sur commande du dispositif maître HST. Une adresse, en tant que telle, permet typiquement de repérer dans la mémoire un multiplet de bits, par exemple un octet (ou byte) de 8 bits, selon la granularité de l'accès en mémoire. Par « adresse d'une région de la mémoire » on entend par exemple une adresse de début de la région, ainsi que la taille de la région, ou en alternative une adresse de fin de la région. Le registre d'indirection DMAi est à cet égard par exemple apte à contenir une adresse de base DMAi_BAdd et la taille DMAi_Sz de la région de la mémoire contenant les données.

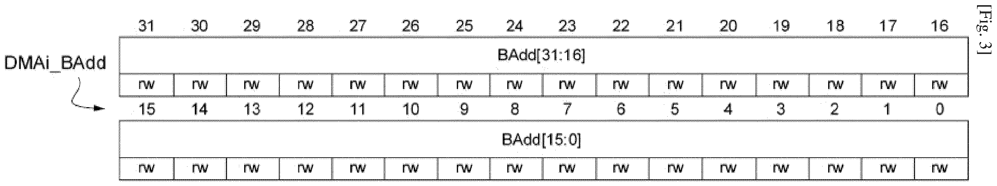

La figure 3 illustre un exemple de registre de 32 bits DMAi_BAdd appartenant à l'un des registres d'indirection DMAi pour contenir une adresse de base d'une région de la mémoire MEM.

Ainsi, sur 32bits, n'importe quelle adresse d'une mémoire de 4 GB (giga Byte) peut être contenue dans le registre d'adresse de base DMAi_BAdd.

Du point de vue des accès en lecture et en écriture « rw », le contenu du registre d'adresse de base DMAi_BAdd peut par exemple :
- être accédé en écriture exclusivement par le dispositif maître HST, et être accédé en lecture par le dispositif maître HST et par dispositif esclave SVL ; ou
- être accédé en écriture et en lecture exclusivement par le dispositif esclave SLV.

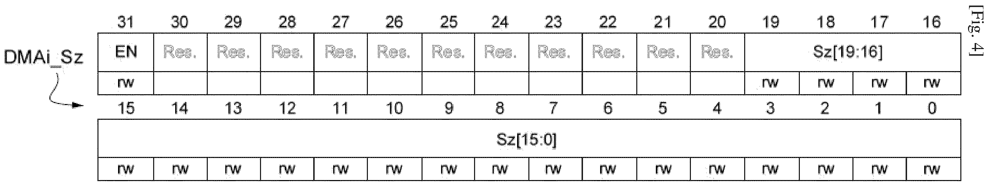

La figure 4 illustre un exemple de registre de 32 bits DMAi_BAdd appartenant à l'un des registres d'indirection DMAi, dans lequel 20 bits sont alloués pour quantifier la taille de la région de la mémoire MEM.

Ainsi, sur 20bits, des tailles de 1 bit à 1 MB (méga Byte) peuvent être contenue dans le registre de taille de région DMAi_Sz.

Du point de vue des accès en lecture et en écriture « rw », le contenu du registre de taille de région DMAi_Sz peut par exemple être accédé en écriture exclusivement par le dispositif maître HST, ou bien exclusivement par le dispositif esclave SLV ; et, dans les deux cas, être accédé en lecture par le dispositif maître HST et par dispositif esclave SVL.

La figure 5 illustre une commande CMD émise par le dispositif maître HST, et prévue par ledit protocole de communication suivant la norme « Secure Digital Input Output » définie par le groupement « SD Association », et qui est par exemple et en particulier une commande étendue de lecture/écriture par blocs.

Un champ CMD_INDX de 6 bits est prévu afin de communiquer index ou identifiant de la commande. Dans cet exemple l'index 110101 en binaire (53 en décimal) permet d'identifier la commande étendue, (par opposition à la « commande directe » dudit protocole), permettant notamment des lectures/écritures par bytes ou par blocs, en fonction du bit BLC.

Un champ de la commande RegAdd est utilisé d'une manière prévue par la norme mais néanmoins compatible avec la norme, afin de sélectionner un registre d'indirection DMAi appartenant au dispositif esclave et contenant une adresse d'une région de la mémoire MEM comportant les données.

Le champ de la commande RegAdd est destiné, dans le protocole de communication selon la norme, à contenir une adresse d'un emplacement de mémoire sur un premier nombre de bits inférieur au deuxième nombre de bits communiquant l'adresse de la région de la mémoire dans les registres d'indirection DMAi, DMAi_BAdd, DMAi_Sz. Dans le protocole de la norme SDIO, le champ RegAdd comporte 17 bits (premier nombre), qui est bien inférieur aux 32 bits (deuxième nombre) du registre d'adresse de base DMAi_BAdd.

L'utilisation du champ RegAdd de la commande CMD peut avantageusement comporter un code sur les bits de poids forts du champ, pour identifier le registre d'indirection DMAi qui contient l'adresse de la région de la mémoire contenant lesdites données, parmi plusieurs registres d'indirection du dispositif esclave contenant des adresses d'autres régions respectives de la mémoire ; et une quantification, sur les bits de poids faible du champ, d'un décalage d'adresse AddOffst (Fig.6) positionnant le début de l'emplacement RgAdd/CMD (Fig.7) des données dans la région RgAdd/DMAi (fig.7). On se référera en particulier à la figure 6.

En outre, la commande CMD comporte dans un champ BYT/BLC CNT de 9 bits prévu à cet égard, le nombre de données à communiquer (ou transférer) avec cette commande CMD, compté sur un nombre d'octets (BYT) ou de blocs (BLC) de taille fixée dans un registre pouvant être plus grande qu'un octet.

La commande CMD comporte d'autres champs classiques S, D, E, #FCT, OPC, CRC7 qui ne sont pas détaillés ici.

La figure 6 illustre un exemple de code sur les bits de poids forts du champ RegAdd, permettant de sélectionner un registre d'indirection DMAi parmi deux registres d'indirection « DMA0 », « DMA1 », ou parmi huit registres d'indirection « DMA0-7 ». Chaque registre d'indirection contient l'adressage de différentes régions mémoires.

D'une part, en premier lieu 61, on peut prévoir sur les trois bits de poids fort 16, 15, 14 le code « 111 » pour identifier un usage standard du champs RegAdd, c'est-à-dire un adressage avec les quatorze bits de poids faible restants 13-0 des registres SDIO_F1_REG de la première fonction, internes au périphérique d'interface esclave SDIOS.

D'autre part, en cas 62, 64 de sélection parmi deux registres d'indirections, on peut prévoir sur les deux bits de poids fort 16, 15, les codes « 0x » (avec x=0 ou 1) pour identifier le registres d'indirections DMAi respectifs (i=[0;1]).

La quantification du décalage d'adresse AddOffst peut être faite sur les bits de poids faibles restant 14 :0, ou 14 :1 si le bit 0 est réservé « r », par exemple afin de communiquer une fin de session ; c'est-à-dire jusqu'à 64 kB (kilo Byte) ou respectivement 32 kB. Cela correspond en particulier à une technique d'alignement en milieu de mot-mémoire (usuellement « half-word aligned offset » en anglais).

En cas 63, 65 de sélection parmi huit registres d'indirections, on peut prévoir sur les quatre bits de poids fort 16, 15, 14, 13 les codes « 1xxx » (avec xxx=[000 ;001 ;010 ;011 ;100 ;101]) pour identifier le registres d'indirections DMAi respectifs (i=[2 ;3 ;4 ;5 ;6 ;7]). Les registres DMA0, DMA1 peuvent être identifié de la même manière que décrit précédemment « 0x » dans les cas 62, 64.

La quantification du décalage d'adresse AddOffst peut être faite sur les bits de poids faibles restant 12 :0, ou 12 :1 si le bit 0 est réservé « r », par exemple afin de communiquer une fin de session ; c'est-à-dire jusqu'à 16 kB (kilo Byte) ou respectivement 8 kB. Cela correspond là-encore à une technique d'alignement en milieu de mot-mémoire (usuellement « half-word aligned offset » en anglais).

La figure 7 illustre la mémoire MEM du dispositif esclave SLV, et en particulier la méthode d'accès à des données contenue dans la mémoire MEM selon la technique utilisant la commande CMD et le registre d'indirection DMAi telle que décrite précédemment en relation avec les figures 1 à 6.

Les données de la communication RgAdd/CMD sont situées entre une adresse de début « start@ » et une adresse de fin « end@ », dans une région mémoire RgAdd/DMAi.

Le contenu du registre d'indirection DMAi définit la plage d'adresses de la région mémoire RgAdd/DMAi ; en particulier par une adresse de base DMAi_BAdd dans le registre d'adresse de base, et par une taille de région DMAi_Sz dans le registre de taille de région.

Le contenu de la commande CMD, en outre du code d'identification du registre d'indirection DMAi à utiliser, définissent la plage d'adresses des données de la communication RgAdd/CMD, en positionnant l'adresse de début start@ avec le décalage d'adresse AddOffst par rapport à l'adresse de base BMAi_BAdd de la région, et l'adresse de fin avec le compte CNT de byte ou de blocs du champ respectif de 9 bits de la commande CMD.

Ainsi, en résumé, il a été décrit des modes de réalisation et de mise en oeuvre, dans lesquels la fonction 1 du protocole SDIO permet de bénéficier jusqu'à 8 canaux « d'accès direct en mémoire » configurés avec des registres d'indirection DMAi, afin par exemple de fournir une adresse de base sur 32 bits, et une taille de région mémoire sur 20 bits, offrant 1 MB de données par canal sur une plage de 4 GB de la mémoire. Le protocole SDIO permet en particulier de tels transferts dans le mode blocs multiples, tel que la commande étendue de lecture/écriture par blocs. L'accès aux région mémoires est en outre avantageusement configurable par l'hôte HST ou par le périphérique SLV, tandis que les données de la communication sont finement positionnées dans la région par des informations dans le contenu de la commande CMD.

## Revendications

1. Procédé de communication de données entre un dispositif esclave (SLV) et un dispositif maître (HST) selon un protocole de communication (SDIO), les données étant enregistrées dans une mémoire appartenant au dispositif esclave (SLV), le procédé comprenant une génération par le dispositif maître d'une commande (CMD) prévue par ledit protocole de communication, et une utilisation d'un champ de la commande (RegAdd) afin de sélectionner un registre d'indirection (DMAi_BAdd ; DMAi_Sz) appartenant au dispositif esclave et contenant une adresse d'une région de la mémoire (MEM) comportant les données.

2. Procédé selon la revendication 1, dans lequel le protocole de communication prévoit que le champ de la commande (RegAdd) est destiné à contenir une adresse d'un emplacement de mémoire sur un premier nombre de bits ; le registre d'indirection (DMAi_BAdd ; DMAi_Sz) comportant un deuxième nombre de bits supérieur au premier nombre pour contenir l'adresse de la région de la mémoire comportant les données.

3. Procédé selon la revendication 2, dans lequel le registre d'indirection contient une adresse de base (DMAi_BAdd) et la taille (DMAi_Sz) de la région de la mémoire contenant les données.

4. Procédé selon l'une des revendications 1 à 3, dans lequel l'utilisation du champ (RegAdd) de la commande (CMD) comporte :
- un code (0 x), sur les bits de poids forts du champ (16 15), pour identifier le registre d'indirection qui contient l'adresse de la région de la mémoire contenant lesdites données, parmi plusieurs registres d'indirection du dispositif esclave contenant des adresses d'autres régions respectives de la mémoire ; et
- une quantification, sur les bits de poids faible du champ (14 :0), d'un décalage d'adresse (AddOffst) positionnant le début de l'emplacement (RgAdd/CMD) des données dans la région (RgAdd/DMAi).

5. Procédé selon la revendication 4, dans lequel ladite commande comporte en outre la taille (CNT) des données de ladite communication.

6. Procédé selon l'une des revendications 1 à 5, dans lequel le protocole de communication suit la norme de communication « Secure Digital Input Output - SDIO » définie par le groupement « SD Association », et dans lequel la commande (CMD) est une commande étendue de lecture/écriture par blocs.

7. Procédé selon l'une des revendications 1 à 6, comprenant en outre une autre utilisation du champ de la commande (RegAdd) afin d'adresser un registre (SDIO_F1_REG) d'une fonction suivant ledit protocole, comportant un code respectivement dédié (111) sur les bits de poids forts du champ (16 15 14) pour identifier cette autre utilisation.

8. Système intégré comportant un dispositif esclave (SLV) et un dispositif maître (HST) aptes à communiquer des données entre eux selon un protocole de communication (SDIO), les données étant enregistrées dans une mémoire (MEM) appartenant au dispositif esclave (SLV), le dispositif maître étant configuré pour générer une commande (CMD) prévue par ledit protocole de communication, et pour utiliser un champ de la commande (RegAdd) afin de sélectionner un registre d'indirection (DMAi_BAdd ; DMAi_Sz) appartenant au dispositif esclave et apte à contenir une adresse d'une région de la mémoire (MEM) comportant les données.

9. Système intégré selon la revendication 8, dans lequel le protocole de communication prévoit que le champ de la commande (RegAdd) est destiné à contenir une adresse d'un emplacement de mémoire sur un premier nombre de bits ; le registre d'indirection (DMAi_BAdd ; DMAi_Sz) étant apte à comporter un deuxième nombre de bits supérieur au premier nombre pour contenir l'adresse de la région de la mémoire comportant les données.

10. Système intégré selon la revendication 9, dans lequel le registre d'indirection est apte à contenir une adresse de base (DMAi_BAdd) et la taille (DMAi_Sz) de la région de la mémoire contenant les données.

11. Système intégré selon l'une des revendications 8 à 10, dans lequel le dispositif maître est configuré pour utiliser le champ (RegAdd) de la commande (CMD) en y incorporant :
- un code (0 x), sur les bits de poids forts du champ (16 15), pour identifier le registre d'indirection contenant l'adresse de la région de la mémoire contenant lesdites données, parmi plusieurs registres d'indirection du dispositif esclave contenant des adresses d'autres régions respectives de la mémoire ; et
- une quantification, sur les bits de poids faible du champ (14 :0), d'un décalage d'adresse (AddOffst) positionnant le début de l'emplacement (RgAdd/CMD) des données dans la région (RgAdd/DMAi).

12. Système intégré selon la revendication 11, dans lequel le dispositif maître est configuré pour incorporer en outre dans ladite commande la taille (CNT) des données de ladite communication.

13. Système intégré selon l'une des revendications 8 à 12, dans lequel le dispositif esclave (SLV) et le dispositif maître (HST) sont aptes à communiquer des données entre eux selon le protocole de communication suivant la norme de communication « Secure Digital Input Output - SDIO » définie par le groupement « SD Association », le dispositif maître étant configuré pour générer la commande (CMD) du type commande étendue de lecture/écriture par blocs.

14. Système intégré selon l'une des revendications 8 à 13, dans lequel le dispositif maître est en outre configuré pour autrement utiliser le champ (RegAdd) de la commande (CMD) afin d'adresser un registre (SDIO_F1_REG) d'une fonction suivant ledit protocole, en y incorporant un code respectivement dédié (111), sur les bits de poids forts du champ (16 15 14), pour identifier cette autre utilisation.
